# EUROPÄISCHE PATENTANMELDUNG

(11) **EP 4 517 571 A1**
(43) Veröffentlichungstag der Anmeldung: **05.03.2025**
(21) Anmeldenummer: 23194588.2
(22) Anmeldetag: 31.08.2023
(51) Int. Cl.: G06F 21/57, H04L 9/08

(54) **VERFAHREN ZUM SICHEREN FIRMWARE-UPDATE UND INDUSTRIEGERÄT**

(71) Anmelder: Siemens Aktiengesellschaft, 80333 München (DE)
(72) Erfinder: Fischer, Kai, 85598 Baldham (DE); Piccoli, Alessandro, 80333 München (DE); Safieh, Malek, 81539 München (DE)
(74) Vertreter: Siemens Patent Attorneys

(57) **Zusammenfassung**

Bei dem Verfahren zum sicheren Firmware-Update eines Industriegeräts von einer ersten Firmware auf eine zweite Firmware schützt ein erster von der ersten Firmware abhängender erster Schlüssel ein Asset, wobei das Asset vorübergehend mit einem durch einen von einer Hardware des Industriegeräts abhängenden zweiten Schlüssel geschützt wird und nachfolgend die erste Firmware durch die zweite Firmware ersetzt wird und mittels des zweiten Schlüssels umgeschlüsselt wird, sodass das Asset mit einem von der zweiten Firmware abhängenden dritten Schlüssel geschützt wird.

## Beschreibung

Die Erfindung betrifft ein Verfahren zum sicheren Firmware-Update von einer ersten Firmware auf eine zweite Firmware und ein Industriegerät.

Die IT-Sicherheit, insbesondere die Cybersicherheit, in Industriegeräten mit eingeschränkten Ressourcen, etwa in eigebetteten Geräten oder in IoT-Geräten, wird immer weiter verbessert. Moderne Architekturen werden ständig fortentwickelt, um die Sicherheit solcher Industriegeräte zu erhöhen. Ein wichtiger Bestandteil von Industriegeräten ist die installierte Software, insbesondere die Firmware, welche die Funktionsweise des Industriegeräts steuert. Die Integrität, Originalität und Authentizität der installierten Firmware ist eine wichtige Anforderung. Dies kann erreicht werden, indem Schutzeigenschaften von Assets für das Industriegerät an die als vertrauenswürdig beurteilte Firmware gebunden, insbesondere von der als vertrauenswürdig beurteilten Firmware abgeleitet, werden. Folglich kann eine verbesserte Sicherheit mit an diese Firmware gebundenen symmetrischen und/oder asymmetrischen Schlüsseln erreicht werden, etwa für eine sichere Speicherung oder eine sichere Kommunikation. Die Schlüssel können dabei zusätzlich von einem geräteindividuellen Geheimnis abgeleitet werden.

Diese Bindung der Geheimnisse an die ausgeführte Firmware erschwert es einem Angreifer, die Firmware zu manipulieren oder eine manipulierte Firmware geeignet zu nutzen. Denn wenn ein Angreifer die Firmware manipulieren würde, dann würden andere, also ungültige, Geheimnisse zur Erfüllung der Schutzeigenschaften abgeleitet. Aus ungültigen Geheimnissen resultieren nun allerdings andere Schlüssel, mit denen die Kryptografie und Sicherheitsfunktionalitäten im Industriegerät nicht erfolgreich genutzt werden können. Dadurch kann festgestellt werden, dass das Gerät nicht vertrauenswürdig ist.

Jedoch müssen in Industriegeräten regelmäßig automatische Firmwareupdates durchgeführt werden können. Mit Firmwareupdates werden z.B. Sicherheitslücken, Bugs und Fehler behoben.

Es ist bekannt, Firmware-Updates durchzuführen und nachfolgend die Sicherheitseigenschaften des Industriegeräts erneut an die aktuelle Firmware zu binden. Dies ist allerdings nicht effizient.

Es bleibt somit die Herausforderung, in Industriegeräten einerseits Firmware-Updates zur ermöglichen und andererseits gleichwohl eine hohe IT-Sicherheit zu gewährleisten.

Es ist daher Aufgabe der Erfindung, ein Verfahren zum sicheren Firmware-Update anzugeben, mit welchem ein Asset bei einem Update der Firmware sicher geschützt werden kann. Es ist ferner Aufgabe der Erfindung, ein Industriegerät anzugeben, mit welchem das Verfahren ausführbar ist.

Diese Aufgabe der Erfindung wird mit einem Verfahren mit den in Anspruch 1 angegebenen Merkmalen sowie mit einem Industriegerät mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum sicheren Firmware-Update eines Industriegeräts von einer ersten Firmware auf eine zweite Firmware schützt ein erster von der ersten Firmware abhängender erster Schlüssel ein Asset, wobei das Asset vorübergehend mit einem durch einen von einer Hardware des Industriegeräts abhängenden zweiten Schlüssel geschützt wird und nachfolgend die erste Firmware durch die zweite Firmware ersetzt wird und mittels des zweiten Schlüssels umgeschlüsselt wird, sodass das Asset mit einem von der zweiten Firmware abhängenden dritten Schlüssel geschützt wird.

Vorteilhaft erweitert das erfindungsgemäße Verfahren die DICE-Architektur, aus welcher die Ableitung von stabilen und instabilen Schlüsseln grundsätzlich bekannt ist. Mit DICE kann sichergestellt werden, dass nur im Falle einer nicht veränderten Firmware eine Schlüsselhierarchie auf einem Gerät reproduziert werden kann. Das erfindungsgemäße Verfahren eröffnet nun zusätzlich vorteilhaft die Möglichkeit von Firmware-Updates, bei denen die Firmware zwangsläufig verändert wird und damit die Schlüsselhierarchie an sich verloren gehen würde. Die Verfahrensschritte des erfindungsgemäßen Verfahrens jedoch erweitern das DICE-Konzept dahingehend, dass sowohl die Eigenschaften Ableitbarkeit der Schlüsselhierarchie als auch die Möglichkeit von authentisierten Firmware-Updates besteht, in dem im Rahmen des Firmware-Updates die Schlüsselhierarchie vorübergehend mit dem zweiten Schlüssel geschützt wird.

In einer bevorzugten Weiterbildung des erfindungsgemäßen Verfahrens wird das Asset mit dem zweiten Schlüssel derart geschützt, dass das Asset mit dem zweiten Schlüssel verschlüsselt wird.

Bei dem Verfahren gemäß der Erfindung wird vorzugsweise das Asset mit dem zweiten Schlüssel derart geschützt, dass das Asset mit dem ersten Schlüssel geschützt wird und der erste Schlüssel mit dem zweiten Schlüssel geschützt wird. In dieser Weiterbildung der Erfindung kann das Asset gewissermaßen mittels einer Verkettung von Schlüsseln geschützt werden.

Bevorzugt wird bei dem erfindungsgemäßen Verfahren mittels des ersten und/oder zweiten und/oder dritten Schlüssels geschützt, indem mit dem ersten und/oder zweiten und/oder dritten Schlüssel jeweils verschlüsselt wird.

Alternativ oder zusätzlich und ebenfalls bevorzugt wird bei dem erfindungsgemäßen Verfahren mittels des ersten und/oder zweiten und/oder dritten Schlüssels geschützt, indem mittels des ersten und/oder zweiten und/oder dritten Schlüssels signiert wird.

Zweckmäßig ist bei dem erfindungsgemäßen Verfahren der erste Schlüssel und/oder zweite Schlüssel und/oder dritte Schlüssel ein asymmetrischer Schlüssel.

Alternativ oder zusätzlich ist bei dem erfindungsgemäßen Verfahren der erste Schlüssel und/oder zweite Schlüssel und/oder dritte Schlüssel ein symmetrischer Schlüssel.

Bei dem erfindungsgemäßen Verfahren ist zweckmäßig der erste Schlüssel und der dritte Schlüssel ein asymmetrischer Schlüssel und der zweite Schlüssel vorzugsweise ein asymmetrischer Schlüssel oder alternativ und ebenfalls bevorzugt ein symmetrischer Schlüssel.

Alternativ und ebenfalls bevorzugt ist bei dem erfindungsgemäßen Verfahren der erste Schlüssel und der dritte Schlüssel und vorzugsweise auch der zweite Schlüssel jeweils ein symmetrischer Schlüssel.

Das erfindungsgemäße Industriegerät ist ausgebildet zur Ausführung eines erfindungsgemäßen Verfahrens zum sicheren Firmware-Update von einer ersten Firmware auf eine zweite Firmware wie vorhergehend beschrieben.

Nachfolgend wird die Erfindung anhand eines in der Zeichnung dargestellten Ausführungsbeispiels näher erläutert.

Es zeigen:
- Fig. 1: ein erstes Ausführungsbeispiel für ein Verfahren zum sicheren Firmware-Update eines Industriegeräts von einer ersten Firmware auf eine zweite Firmware schematisch in einer diagrammatischen Darstellung,
- Fig. 2: ein zweites Ausführungsbeispiel für ein Verfahren zum sicheren Firmware-Update eines Industriegeräts von einer ersten Firmware auf eine zweite Firmware schematisch in einer diagrammatischen Darstellung,
- Fig. 3: ein drittes Ausführungsbeispiel für ein Verfahren zum sicheren Firmware-Update eines Industriegeräts von einer ersten Firmware auf eine zweite Firmware schematisch in einer diagrammatischen Darstellung, und
- Fig. 4: ein viertes Ausführungsbeispiel für ein Verfahren zum sicheren Firmware-Update eines Industriegeräts von einer ersten Firmware auf eine zweite Firmware schematisch in einer diagrammatischen Darstellung.

In den dargestellten Ausführungsbeispielen wird die nachfolgend erläuterte Struktur von Schlüsselhierarchien in Industriegeräten verwendet:
Die Schlüsselableitungsketten basieren in den dargestellten Ausführungsbeispielen stets auf einem Geheimnis in Form eines Hardware-Geheimnisses GG, das in ROM-Speicher liegt. Dieses Hardware-Geheimnis GG wird während der Erstellung des Industriegeräts konfiguriert und kann nicht geändert werden. Dieses Hardware-Geheimnis GG garantiert eine Einzigartigkeit der Schlüssel, die von diesem Hardware-Geheimnis GG abgeleitet werden.

Im Open-DICE-Profil werden zwei verschiedene Schlüsselhierarchien spezifiziert. In einer ersten Schlüsselhierarchie ist die Schlüsselableitung von einem Firmware-Status einer jeweils auf dem Industriegerät installierten Firmware abhängig. In diesem Fall ist die Schlüsselhierarchie instabil und ändert sich mit neuen Firmware-Installationen.

In einer von der ersten Schlüsselhierarchie verschiedenen, zweiten, Schlüsselhierarchie werden Schlüsselableitungsparameter genutzt, die unabhängig von der aktuellen Firmwareware-Version sind. In diesem Fall ist die Schlüsselhierarchie stabil und erstellt immer die gleichen Schlüssel. D. h. diese zweite Schlüsselhierarchie erstellt auch für unterschiedliche Firmware-Installationen die gleichen Schlüssel.

Die beiden zuvor erwähnten Schlüsselhierarchien werden jeweils während des Bootens vom Industriegerät berechnet und etabliert. Jeder Schritt in in einer sich beim Booten des Industriegeräts einstellenden Boot-Kette bekommt ein Output-Geheimnis vom jeweils vorherigen Boot-Niveau und erstellt ein neues Geheimnis als Output für ein nächste Niveau. Jedes Niveau kann die jeweiligen Geheimnisse verwenden, um symmetrische oder asymmetrische Schlüssel zu generieren.

Diese beiden Schlüsselhierarchien kommen in den dargestellten Ausführungsbeispielen jeweils gemeinsam zum Einsatz.

Dabei werden in den jeweiligen Ausführungsbeispielen jeweils entweder symmetrische oder asymmetrische Schlüssel verwendet.

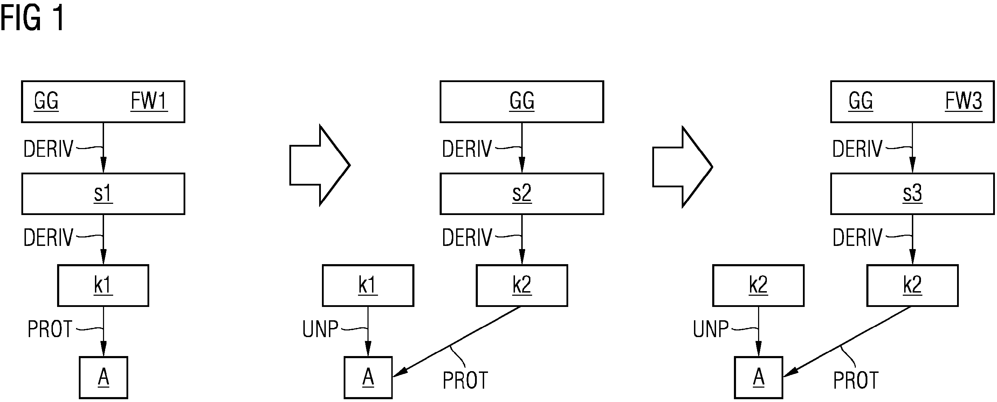

Zunächst werden Ausführungsbeispiele für symmetrische Schlüssel erläutert:
Die dargestellten Ausführungsbeispiele beschrieben jeweils Industriegeräte, in welchen im normalen Betrieb jeweils ein Asset A geschützt wird. Dazu wird jeweils ein symmetrischer erster Schlüssel k1 direkt aus einem ersten instabilen Geheimnis s1 abgeleitet DERIV, welcher das Asset A schützt, indem er das Asset A symmetrisch verschlüsselt. Dabei wird das erste instabile Geheimnis s1 von einer ersten Firmware FW1 des Industriegeräts abgeleitet DERIV. Es wird keine sichere Speicherung für das erste instabile Geheimnis s1 oder den ersten symmetrischen Schlüssel k1 vorgesehen. Daher würden sich das erste instabile Geheimnis s1 sowie der erste symmetrische Schlüssel k1 mit jeder Änderung der ersten Firmware FW1 verändern und es können die Schutzeigenschaften der Assets A nicht erfüllt werden. Dies dient wie in Abbildung 1 beschrieben dazu, die erste Firmware FW1 vor Manipulationsangriffen zu schützen oder Manipulationen an der ersten Firmware FW1 zu erkennen.

Wenn nun ein Firmwareupdate von der ersten Firmware FW1 auf eine zweite Firmware FW2 bevorsteht, unterscheiden wir zwischen 2 Ausführungsbeispielen für dieses Konzept:
Das Konzept des ersten Ausführungsbeispiels ist in Fig. 1 dargestellt. Im normalen Betrieb mit der ersten Firmware FW1 werden die Schutzeigenschaften mit dem ersten symmetrischen Schlüssel k1 erstellt, welcher aus dem ersten instabilen Geheimnis s1 abgeleitet DERIV wird. Falls das Firmwareupdate bevorsteht, wird ein stabiles Geheimnis s2 zum Ableiten DERIV des vorübergehenden zweiten symmetrischen Schlüssels k2 benutzt. Folglich können die Schutzeigenschaften mit dem ersten symmetrischen Schlüssel k1 im Sinne einer Deprotektions-Operation UNP angewendet werden, die beispielsweise eine Entschlüsselung mit dem ersten symmetrischen Schlüssel k1 und eine Prüfung der Integrität mittels einer kryptographischer Prüfsumme umfasst. Nachfolgend kann eine Protektions-Operation PROT mit dem zweiten symmetrischen Schlüssel k2 angewendet werden, d. h. eine Verschlüsselung mit dem zweiten symmetrischen Schlüssel k2 und einer Erzeugung einer kryptografischen Prüfsumme. Nach der Installation des Firmwareupdates auf eine zweite Firmware FW2 wird ein zweites instabiles Geheimnis s3 aus der zweiten Firmware FW2 abgeleitet DERIV. Aus dem zweiten instabilen Geheimnis s3 wird ein neuer dritter symmetrischer Schlüssel k3 abgeleitet DERIV. Es werden diesmal die Schutzeigenschaften mit dem temporären zweiten symmetrischen Schlüssel k2 im Sinne einer Deprotektions-Operation UNP angewendet, d. h. eine Entschlüsselung mittels des zweiten symmetrischen Schlüssels k2 und einer Prüfung der Integrität des Assets A mittels einer kryptographischen Prüfsumme. Denn das stabile Gehmeimnis ist wie zuvor erläutert von der Änderung der Firmware von der ersten Firmware FW1 auf die zweite Firmware FW2 unabhängig. Nachfolgend kann mit dem dritten symmetrischen Schlüssel k3 eine Protektions-Operation PROT angewendet werden, d. h. eine Verschlüsselung des Assets A sowie eine Erzeugung einer kryptografischen Prüfsumme.

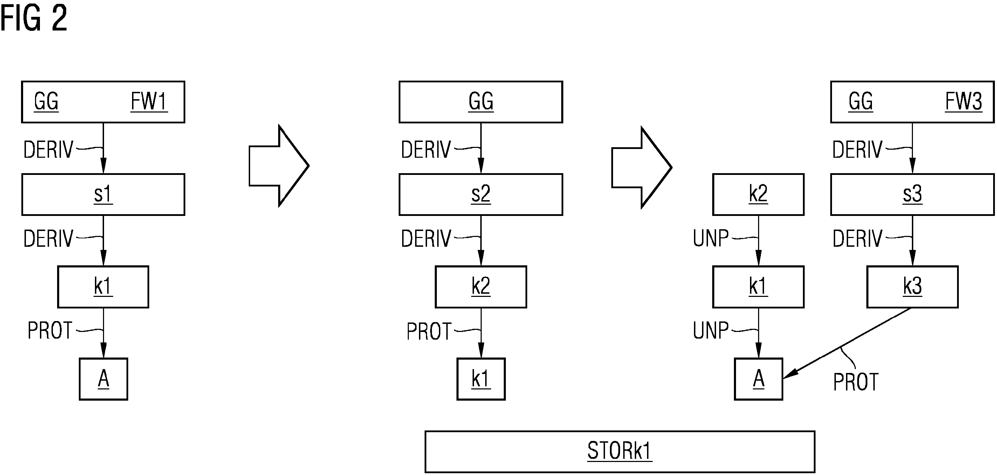

Ein weiteres Ausführungsbeispiel, welches symmetrische Schlüssel verwendet, ist in Fig. 2 dargestellt:
Im normalen Betrieb mit einer ersten Firmware FW1 werden die Schutzeigenschaften eines Assets A mit dem ersten symmetrischen Schlüssel k1 erstellt, welcher aus einem ersten stabilen Geheimnis s1 abgeleitet DERIV wird. Falls ein Firmwareupdate auf eine zweite Firmware FW2 bevorsteht, wird ein stabiles Geheimnis s2 der Hardware des Industriegeräts herangezogen und daraus ein vorübergehender zweiter symmetrischer Schlüssel k2 abgeleitet DERIV. Anschließend wird der erste symmetrische Schlüssel k1 mit dem vorübergehenden zweiten symmetrischen Schlüssel k2 verschlüsselt und sicher in einem Schlüsselspeicher STORk1 gespeichert. Nach der Installation des Firmwareupdates auf die zweite Firmware FW2 kann ein neues instabiles Geheimnis s3 aus der zweiten Firmware FW2 ableiten DERIV werden. Daraus wird ein neuer, dritter, symmetrischer Schlüssel k3 abgeleitet DERIV. Folglich kann der gespeicherte erste symmetrische Schlüssel k1 mit dem vorübergehenden zweiten symmetrischen Schlüssel k2 entschlüsselt werden, denn der zweite symmetrische Schlüssel k2 wird aus dem stabilen Geheimnis s2 abgeleitet DERIV und würde sich nach einem Firmwareupdate auf die Firmware FW2 nicht ändern. Letztlich können die Schutzeigenschaften mit dem ersten symmetrischen Schlüssel k1 im Sinne einer Deprotektions-Operation UNP angewendet werden, beispielsweise einer Entschlüsselung mittels des ersten symmetrischen Schlüssels k1 und einer Prüfung der Integrität des Assets A mittels einer kryptographischer Prüfsumme. Nachfolgend kann mit dem dritten symmetrischen Schlüssel k3 erneut eine Protektions-Operation PROT angewendet werden, beispielsweise eine Verschlüsselung mittels des dritten symmetrischen Schlüssels sowie eine Erzeugung einer kryptografischen Prüfsumme.

Als Abwandlungen dieser Ausführungsbeispiele können die vorgestellten Verfahren für die Aktualisierung von beliebig vielen symmetrische Schlüsseln erweitert werden. Beim zweiten beschriebenen Ausführungsbeispiel würde jedoch nur ein vorübergehender zweiter symmetrischer Schlüssel k2 für die Verschlüsselung von allen vorhandenen Schlüsseln benötigt, die aus einem oder mehreren instabilen Geheimnissen abgeleitet DERIV werden. Aus diesem Grund kann das erste beschriebene Ausführungsbeispiel zu einer höheren Anzahl von Protektions- PROT und Deprotektions-Operationen UNP verglichen mit dem zweiten Ausführungsbeispiel führen und daher zu einer niedrigeren Performance führen. Andererseits erfordert das zweite Ausführungsbeispiel eine sichere Zwischenspeicherung für verschlüsselte Schlüssel aus instabilen Geheimnissen, d. h. für mehrere verschlüsselte Schlüssel analog zu dem ersten symmetrischen Schlüssel k1.

Nachfolgend werden Ausführungsbeispiele für asymmetrische Schlüssel beschrieben:
Im normalen Betrieb wird ein asymmetrisches Schlüsselpaar mit einem ersten privaten Schlüssel sk1 und einem ersten öffentlichen Schlüssel pk1 direkt aus einem ersten instabilen Geheimnis s1 abgeleitet DERIV. Es wird keine sichere Speicherung für das erste instabile Geheimnis s1 oder den ersten privaten Schlüssel sk1 und den ersten öffentlichen Schlüssel pk1 vorgesehen. Daher würden sich das erste instabile Geheimnis s1 sowie der erste private Schlüssel sk1 und der erste öffentliche Schlüssel pk1 mit jeder Änderung einer ersten auf dem Industriegerät installierten Firmware FW1 in eine zweite Firmware FW2 verändern. Protektions- PROT und Deprotektions-Operationen UNP können dann nicht mehr erfolgreich durchgeführt werden. Dies dient wie zu den vorhergehenden Ausführungsbeispielen erläutert dazu, die laufende erste Firmware FW1 vor Manipulationsangriffen zu schützen. Typischerweise wird der öffentliche Schlüssel pk1 von einer Zertifizierungsstelle, auch als Certificate Authority (CA) bezeichnet, zertifiziert.

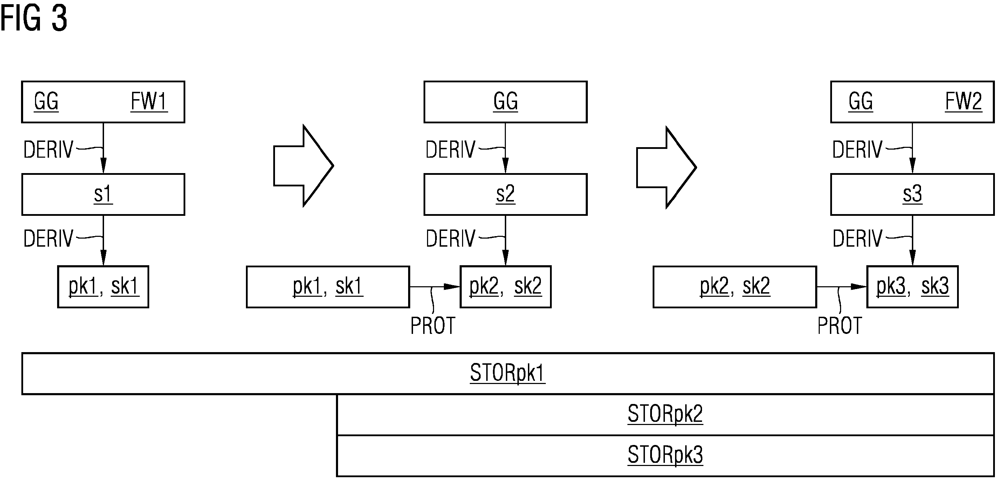

Wenn ein Firmwareupdate bevorsteht, unterscheiden wir abermals zwei Ausführungsbeispiele für dieses Konzept: In einem ersten dieser Ausführungsbeispiele werden wie in Fig. 3 dargestellt im normalen Betrieb der ersten Firmware FW1 die asymmetrische Schutzeigenschaften basierend auf dem ersten Schlüsselpaar mit erstem privaten Schlüssel sk1 und erstem öffentlichen Schlüssel pk1 erstellt, welches aus einem ersten instabilen Geheimnis s1 abgeleitet DERIV wird. Falls ein Firmwareupdate auf eine Firmware FW2 bevorsteht, wird ein stabiles Geheimnis s2 zur Ableitung eines vorübergehenden neuen Schlüsselpaars mit einem zweiten privaten Schlüssel sk2 und einem zweiten öffentlichen Schlüssel pk2 benutzt. Zunächst wird der zweite öffentliche Schlüssel pk2 mit dem ersten privaten Schlüssel sk1 signiert. Der signierte zweite öffentliche Schlüssel pk2 wird im Industriegerät in einem Schlüsselspeicher STORpk2 für eine nachfolgende Verifizierung gespeichert. Somit entsteht eine Zertifizierungskette, weil der erste öffentlichen Schlüssel pk1 von einer Zertifizierungsstelle zertifiziert ist. Alternativ kann in weiteren, nicht eigens dargestellten Ausführungsbeispielen der neue, zweite öffentliche Schlüssel pk2 von einer Zertifizierungsstelle entsprechend zertifiziert werden. Ein Zertifikat einschließlich des ersten öffentlichen Schlüssels wird in einem Schlüsselspeicher STORpk1 des Industriegeräts gespeichert.

Nun kann das neue Firmwareupdate auf die zweite Firmware FW2 installiert werden. Nach erfolgreicher Installation kann ein neues, zweites instabiles Geheimnis s3 aus der zweiten Firmware FW2 abgeleitet DERIV werden. Naturgemäß können das erste instabile Geheimnis s1 und somit auch der erste private Schlüssel sk1 nicht mehr abgeleitet DERIV werden. Aus den zweiten instabilen Geheimnis s3 wird ein neues Schlüsselpaar mit einem dritten privaten Schlüssel sk3 und einem dritten öffentlichen Schlüsselpk3 erzeugt. Der dritte öffentliche Schlüssel pk3 wird dann mit dem zweiten privaten Schlüssel sk2 signiert und in einem Schlüsselspeicher STORpk3 gespeichert. Damit wird die Zertifizierungskette erweitert. Alternativ kann der dritte öffentliche Schlüssel pk3 nun ebenfalls von einer öffentlichen Zertifizierungsstelle signiert werden.

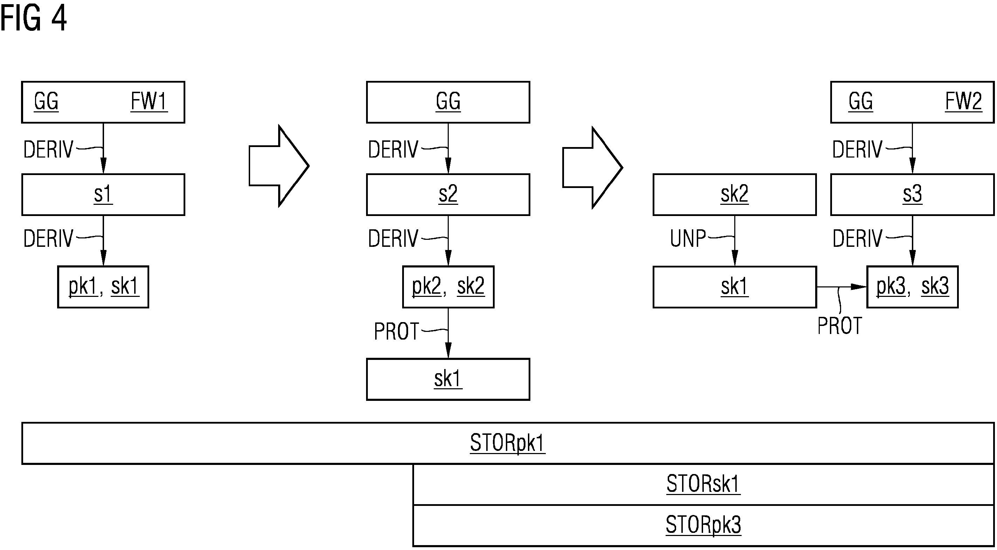

Ein weiteres Ausführungsbeispiel, welches asymmetrische Schlüssel nutzt, ist in Fig. 4 dargestellt. Im normalen Betrieb mittels einer ersten Firmware FW1 werden die asymmetrische Schutzeigenschaften basierend auf einem ersten Schlüsselpaar mit einem ersten privaten Schlüssel sk1 und einem ersten öffentlichen Schlüssel pk1 erstellt, welches aus einem ersten instabilen Geheimnis s1 abgeleitet DERIV wird. Ein Zertifikat einschließlich des ersten öffentlichen Schlüssels wird in einem Schlüsselspeicher STORpk1 des Industriegeräts gespichert.

Falls ein Firmwareupdate auf eine zweite Firmware FW2 bevorsteht, wird ein stabile Geheimnis s2 zum Ableiten DERIV eines einzigen vorübergehenden symmetrischen Schlüssels k2 benutzt. Anschließend wird der erste private Schlüssel sk1 mit dem symmetrischen Schlüssel k2 verschlüsselt und sicher in einem Schlüsselspeicher STORsk1 zwischengespeichert. Nun kann die zweite Firmware FW2 installiert werden. Nach erfolgreicher Installation kann ein neues zweites instabiles Geheimnis s3 aus der zweiten Firmware FW2 abgeleitet DERIV werden. Das erste instabile Geheimnis s1 kann nun nicht mehr abgeleitet DERIV werden. Aus dem zweiten instabilen Geheimnis s3 wird neues Schlüsselpaar mit einem dritten privaten Schlüssel sk3 und einem dritten öffentlichen Schlüssel pk3 erzeugt. An sich stellen sk3 und pk3 in diesem Ausführungsbeispiel für sich betrachtet einen zweiten privaten Schlüssel und einen zweiten öffentlichen Schlüssel dar, aber zur Konsistenz mit dem vorhergehenden Ausführungsbeispiel wird eine entsprechende Bezeichnung beibehalten und der symmetrische Schlüssel k2 gewissermaßen als zweiter Schlüssel gezählt, sodass die Bezeichnung von sk3 und pk3 als dritter privater Schlüssel und dritter öffentlicher Schlüssel genutzt wird. Zunächst kann der gespeicherte erste private Schlüssel sk1 mit dem symmetrischen Schlüssel k2 entschlüsselt werden, weil der symmetrische Schlüssel k2 aus dem stabilen Geheimnis abgeleitet DERIV ist und sich nach dem Firmwareupdate auf die zweite Firmware FW2 nicht ändern würde. Schließlich wird der dritte öffentliche Schlüssel pk3 mit dem zweiten privaten Schlüssel sk2 signiert. Der signierte dritte öffentliche Schlüssel pk3 wird in einem Schlüsselspeicher STORpk3 gespeichert. Alternativ kann der dritte öffentliche Schlüssel nun ebenfalls von einer öffentlichen Zertifizierungsstelle signiert werden.

In weiteren, nicht eigens dargestellten Ausführungsbeispielen können beide zuvor beschriebenen Ausführungsbeispiele für die Aktualisierung von beliebig vielen asymmetrische Schlüsseln erweitert werden. Jedoch wird nur ein einziger symmetrischer Schlüssel k2 für ein Firmwareupdate mit dem in Fig. 4 gezeigten Ausführungsbeispiel benötigt, und zwar unabhängig von der Anzahl der vorhandenen asymmetrischer Schlüsselpaare. Daher kann das in Fig. 3 gezeigte Ausführungsbeispiel zu einer höheren Anzahl von Operationen für asymmetrischen Schutzeigenschaften im Vergleich zum in Fig. 4 dargestellten Ausführungsbeispiel führen und damit zu einer niedrigeren Performance. Außerdem benötigt das in Fig. 3 gezeigte Ausführungsbeispiel einen größeren Speicherplatz für eine sichere Speicherung von mehreren signierten öffentlichen Schlüsseln während des Firmwareupdates, also mehreren signierten zweiten öffentlichen Schlüsseln pk2.

## Patentansprüche

1. Verfahren zum sicheren Firmware-Update eines Industriegeräts von einer ersten Firmware (FW1) auf eine zweite Firmware (FW2), bei welchem ein erster von der ersten Firmware (FW1) abhängender (DERIV) erster Schlüssel (k1; sk1) ein Asset (A) schützt, wobei das Asset (A) vorübergehend mit einem durch einen von einer Hardware des Industriegeräts abhängenden (DERIV) zweiten Schlüssel (k2; sk2) geschützt wird und nachfolgend die erste Firmware (FW2)durch die zweite Firmware (FW2) ersetzt wird und mittels des zweiten Schlüssels (k2; sk2) umgeschlüsselt wird, sodass das Asset mit einem von der zweiten Firmware (FW2) abhängenden (DERIV) dritten Schlüssel (k3; sk3) geschützt wird.

2. Verfahren nach einem der vorhergehenden Ansprüche, bei welchem das Asset (A) mit dem zweiten Schlüssel (k3; sk3) derart geschützt wird, dass das Asset (A) mit dem zweiten Schlüssel (k2; sk2) verschlüsselt wird.

3. Verfahren nach einem der vorhergehenden Ansprüche, bei welchem das Asset (A) mit dem zweiten Schlüssel (k2; sk2) derart geschützt wird, dass das Asset (A) mit dem ersten Schlüssel (k1; sk1) geschützt wird und der erste Schlüssel (k1; sk1) mit dem zweiten Schlüssel (k2; sk2) geschützt wird.

4. Verfahren nach einem der vorhergehenden Ansprüche, bei welchem mittels des ersten (k1; sk1) und/oder zweiten (k2; sk2) und/oder dritten Schlüssels (k3; sk3) geschützt wird, indem mit dem ersten (k1; sk1) und/oder zweiten (k2; sk2) und/oder dritten Schlüssel (k3; sk3) jeweils verschlüsselt wird.

5. Verfahren nach einem der vorhergehenden Ansprüche, bei welchem mittels des ersten (sk1) und/oder zweiten (sk2) und/oder dritten Schlüssels (sk3) geschützt wird, indem mittels des ersten (sk1) und/oder zweiten (sk2) und/oder dritten Schlüssels (sk3) signiert wird.

6. Verfahren nach einem der vorhergehenden Ansprüche, bei welchem der erste Schlüssel (sk1) und/oder zweite Schlüssel (sk2) und/oder dritte (sk3) Schlüssel ein asymmetrischer Schlüssel ist.

7. Verfahren nach einem der vorhergehenden Ansprüche, bei welchem der erste Schlüssel (k1) und/oder zweite Schlüssel (k2) und/oder dritte Schlüssel (k3) ein symmetrischer Schlüssel ist.

8. Verfahren nach einem der vorhergehenden Ansprüche, bei welchem der erste Schlüssel (sk1) und der dritte Schlüssel (sk3) jeweils ein asymmetrischer Schlüssel ist und der zweite Schlüssel asymmetrischer Schlüssel (sk2) oder ein symmetrischer Schlüssel (k2) ist.

9. Verfahren nach einem der vorhergehenden Ansprüche, bei welchem der erste Schlüssel (k1) und der dritte Schlüssel (k3) und vorzugsweise auch der zweite Schlüssel (k2) jeweils ein symmetrischer Schlüssel ist.

10. Industriegerät, ausgebildet zur Ausführung eines Verfahrens nach einem der vorhergehenden Ansprüche.
